Europäisches Patentamt

European Patent Office

Office européen des brevets

(11) Publication number: **0 542 268 A1**

## EUROPEAN PATENT APPLICATION

(21) Application number: 92119374.4

(22) Date of filing: **12.11.92**

(51) Int. Cl.5: **C08J 5/02**, C08J 3/26, C08L 21/02

(30) Priority: **12.11.91 JP 295995/91**

(43) Date of publication of application:
**19.05.93 Bulletin 93/20**

(84) Designated Contracting States:
**DE FR GB**

(71) Applicant: **SUMITOMO RUBBER INDUSTRIES LIMITED**
**No. 1−1, Tsutsui−cho 1−chome**
**Chuo−ku Kobe−shi Hyogo 651(JP)**

(72) Inventor: **Sakaki, Toshiaki**
**1314−1, Yota, Onoe−cho**
**Kakogawa−shi, Hyogo 675(JP)**
Inventor: **Kimura, Akitaka**
**1−2−20, Tsukimiyamahonmachi, Suma−ku**
**Kobe−shi, Hyogo 654(JP)**

(74) Representative: **Popp, Eugen, Dr. et al**
**MEISSNER, BOLTE & PARTNER**
**Widenmayerstrasse 48 Postfach 86 06 24**
**W−8000 München 86 (DE)**

(54) Latex rubber product and method for manufacturing the same.

(57) The invention relates to a latex rubber product obtained by forming and vulcanizing latex which is prevulcanized in the presence of a compounding agent for vulcanization containing a vulcanizing agent of sulfur or sulfur−containing compound, and is deprived of free compounding agents not spent in prevulcanization by centrifugal separation. This product is reduced in the ash content in combustion and is hence useful for reducing the refuse, and is particularly suitable for use in radiation contamination preventive rubber gloves which are incinerated after use for disposal. Besides, since the amount of sulfur oxide generated in combustion gas is decreased, it is also effective for prevention of air pollution and measure against acid rain. Moreover, since the compounding agents irritating the skin are removed, it is safe in application as gloves or the like.

BACKGROUND OF THE INVENTION

The present invention relates to a latex rubber product such as gloves, and a method for manufacturing the same, and more specifically to a novel latex rubber product which contains small amount of chemicals stimulating the skin, and is reduced in respect of the ash content in combustion and the sulfur oxides in the combustion gas and a method for manufacturing the same.

Hitherto, the sulfur vulcanization using sulfur or substance containing sulfur as vulcanizing agent is the most general vulcanization method of rubber, and is noted for advantages including low cost with simple facility, and further the obtained rubber has excellent properties.

However, the rubber product vulcanized by sulfur produces sulfur oxides in combustion because the rubber contains sulfur and incombustible vulcanization activator (zinc oxide is most generally used), and relatively much ash content is left over. In particular, the sulfur oxides produced in combustion disposal of rubber vulcanized by sulfur are known to cause various problems such as air pollution, acid rain and corrosion of furnace. Besides, if much ash content is left over after combustion, it is disadvantageous for minimizing the refuse. In particular, radiation contamination protective rubber gloves used at nuclear power plants and others are incinerated after use, and the ash containing radioactivity are stored, and therefore if a great number of gloves are incinerated, the generated ash volume is immense, and a wide space is needed for storage.

Furthermore, vulcanization promoters such as zinc salt of mercaptobenzothiazole, tetramethylthiuram disulfide, and tetraethylthiuram disulfide stimulate the skin, and rubber products containing them may cause allergy in people having sensitive skin.

These compounding materials are, however, indispensable for sulfur vulcanization. Therefore, if the compounding amount is decreased, no matter how small the consumed amount is, vulcanization is not promoted, and properties are lowered.

On the other hand, instead of sulfur vulcanization, if peroxides are used as the crosslinking agent or if method of crosslinking by radiation is adopted, the problems are solved because sulfur and zinc oxide are not contained. However, the peroxides stimulate the skin and are not suited to rubber products such as gloves used in direct contact with the human skin. Besides, the smell of decomposition product of peroxides lingers. In the case of radiation crosslinking, the facility cost is tremendous, and it involves problems in safety and environments, and still more the properties of the obtained rubber, in particular properties after immersion in water, are severly lowered. Thus it is not actually on the level of practical use.

It is hence a primary object of the invention to present a latex rubber product reduced in the generated amount of the sulfur oxide or ash content in combustion of vulcanized rubber, and a method for manufacturing the same.

It is other object of the invention to present a latex rubber product not containing harmful compounding materials and hence hardly stimulating the skin, and a method for manufacturing the same.

SUMMARY OF THE INVENTION

To achieve the above objects, the present inventors accumulated intensive researches, and completed the invention by discovering a new fact that the above objects can be achieved by a latex rubber product comprising a product formed and vulcanized from latex which is prevulcanized in the presence of a compounding agent for vulcanization containing vulcanizing agent of sulfur or sulfer-containing compound, and is eliminated of the free compounding agent not spent in prevulcanization.

More specifically, according to the invention, unlike the prior art, a latex rubber product is not obtained by using a latex which contains as much agent as is added in compounding, but is obtained by using the latex from which the excess vulcanization compounding agent is removed after prevulcanization, and therefore the compounding agent is hardly left over in the obtained rubber product, and hence the generated amount of ash and sulfur oxide is reduced, and also the skin is hardly stimulated by harmful compounding agents.

The invention also presents a method for manufacturing a latex rubber product characterized by adding a vulcanizing agent containing sulfur to latex, prevulcanizing, and subsequently removing the free compounding agent in the latex by centrifugal separation, after that forming, and vulcanizing.

The present inventors thus noticed that the vulcanizing agent containing sulfur has larger specific gravity than the rubber particles do in the latex, generally, and discovered that the compounding agent may be easily separated from the rubber particles by centrifugal separation, and completed the invention.

DETAILED DESCRIPTION OF THE INVENTION

Examples of material latex in the invention may include natural rubber alone, or natural rubber compounded with stabilizer or preservative, also an aqueous emulsion of synthetic rubber such as acrylonitrile − butadiene rubber, styrene − butadiene rubber, isoprene rubber, and chloroprene rubber, and aqueous emulsion of the blend of two or more than two types thereof. The rubber content in the latex is usually 40 to 70 % by weight.

The stabilizer of natural rubber may include, for example, carboxymethyl cellulose sodium, polyvinyl alcohol saponified matter, casein, sodium alginate, and starch. The stabilizer is added by 0.05 to 0.2 % by weight to the total amount of latex. Examples of preservative include ammonia, tetramethylthiuram disulfide, zinc oxide, boric acid, lauric acid, and sodium salt of pentachlorophenol. The preservative is added by 0.05 to 0.7 % by weight to the total amount of latex.

Representative examples of natural rubber latex by classification of preservatives include high ammonia latex (ammonia content 0.7%), low ammonia SPP latex (containing ammonia 0.2% and sodium salt of pentachlorophenol 0.2%), low ammonia TZ latex(ammonia 0.2%, tetramethylthiuram disulfide 0.0125% and zinc oxide 0.0125%), low ammonia boric acid latex (containing ammonia 0.2%, boric acid 0.2% and lauric acid 0.05%), and low ammonia ZDC latex (containing ammonia 0.2%, zinc diethyl − dithiocarbamate 0.1% and lauric acid 0.02%).

The compounding agent for vulcanization to be added to the latex includes, aside from the known vulcanizing agent, vulcanization accelerator, vulcanization retarder and vulcanization activator.

The vulcanizing agent includes sulfur, or compounds containing sulfur, such as 4,4' − dithiodimorpholine and dipentamethylene thiuram tetrasulfide.

Examples of vulcanization accelerator include amines such as hexamethylene tetramine and n − butylaldehyde aniline; guanidine such as diphenyl guanidine and di − o − trylguanidine; and sulfur com − pounds such as N,N' − diphenylthiourea, N,N' − diethyl − thiourea, dibutylthiourea, dilaurylthiourea, mercap − tobenzothiozole, sodium salt, zinc salt or cyclohexylamine salt of mercaptobenzothiazole, dibenzothiazole disulfide, tetramethylthiuram disulfide, tetraethylthiuram disulfide, tetrabutylthiuram disulfide, tetramethyl − thiuram monosulfide, dipentamethylenethiuram tetrasulfide, piperidine salt of pentamethylene dithiocar − bamate, sodium diethyl dithiocarbamate, sodium dibutyl dithiocarbamate, zinc dimethyl dithiocarbamate, zinc diethyldithiocarbamate, zinc dibutyl dithiocarbamate, and zinc N − ethyl − N − phenyl dithiocarbamate.

Examples of vulcanization retarder include organic acids such as phthalic anhydride, salicylic acid and benzoic acid; and N − nitrosodiphenyl amine, N − (cyclohexylthio)phthalimide, diphenylurea, and sulfone amide derivative. However, in the latex, the vulcanization retarder is hardly used.

Examples of vulcanization activator include inorganic substances such as zinc oxide, lead oxide, magnesium oxide and zinc carbonate, and organic substances such as stearic acid, oleic acid, lauric acid, zinc stearate, triethanolamine, diethanolamine, diethyleneglycol,and triethyleneglycol.

The compounding amounts of each component are not particularly limited, but may be in conventional ranges. Specifically, it is proper to compound about 0.5 to 2 parts by weight of the vulcanizing agent to 100 parts by weight of rubber. It is proper to compound about 0.5 to 2 parts by weight of vulcanization accelerator to 100 parts by weight of rubber. It is proper to compound about 0.3 to 1 part by weight of the vulcanization retarder to 100 parts by weight of rubber. It is proper to compound about 1 to 5 parts by weight of the vulcanization activator to 100 parts by weight of rubber.

Prevulcanization in the invention is a step of promotion of vulcanization in particles as the compounding material for vulcanization given in a dispersing state adheres to or gets into the rubber particles dispersed in water in colloidal state. Such prevulcanization is a kind of chemical reaction conducted by adding the vulcanization material to the latex by a common amount, and the reaction is promptly promoted by raising the temperature, but even at room temperature, prevulcanization is complete in several days. Generally, prevulcanization is effected by aging for 1 hour to 1 day at 30 to 80 ˚C.

Properties of rubber product such as film prepared from latex depend greatly on the degree of prevulcanization. At the end of prevulcanization, centrifugal separation is effected, and surplus vulcanizing agent, vulcanization accelerator and vulcanization activater which are not spent in prevulcanization are removed. Afterwards, as required, anti − oxidant, coloring agent, weather resistant agent (such as wax, etc.), thickener and the like are added. By forming, processing and vulcanizing this latex, a rubber product is obtained.

In the forming and processing, the conventional latex processing method may be directly applied. For example, practical methods are the film forming method of immersing a former composed of glass or metal into latex and drying, the coagulation method of coagulating rubber particles on the former surface by making use of Coulomb force, the heatsensitive method of using latex containing heatsensitive coagulant, and the electrodeposition method of applying a positive electric charge to a metallic former and depositing rubber particles on the die surface.

More specifically, among them, the coagulation method is to deposit cations ($Ca^{2+}$, etc.) on the former surface, immerse the former in latex, and form the rubber layer as the negatively charged rubber particles in the latex are attracted by the cations and coagulate on the former surface. The heatmosensitive method is to immerse a preheated former in the latex containing heatsensitive coagulant to coagulate the latex containing the heatsensitive coagulant on the former surface, lift off the former from the latex in this state, and dry. As the heatsensitive coagulant, for example, polymer such as polyvinyl methylether and polyalkylene glycol, various zinc ammonium complex salts, sodium silicofluoride, ammonium nitrate, and others may be used.

Vulcanization is usually completed in 0.2 to 1 hour, at 80 to 120 °C.

In centrifugation, if the centrifugal force is too strong, rubber particles coagulate irreversibly and fail to work as latex. If too weak, the compounding agent cannot be sufficiently separated from rubber particles, and the initial object of the invention is not achieved. Therefore, depending on the type and quantity of the compounding agents, and the degree of prevulcanization, an optimum centrifugal force must be determined. Generally, the specific gravity of the natural rubber is 0.91, while the specific gravity of the compounding agent for vulcanization in general use is 2.1 in sulfur, 5.4 to 5.7 in zinc oxide, 3.8 to 4.2 in titanium oxide, and about 0.9 in wax. Meanwhile, as the vulcanization accelerator, zinc salt of 2−mercaptobenzothiazole (tradename Nocceler MZ manufactured by Ouchi Shinko Kagaku) is 1.70 in specific gravity, the thiuram compound, such as tetraethyl thiuram disulfide (Nocceler TET of Ouchi Shinko Kagaku) is 1.31, the dithiocarbamate zinc compound, such as zinc dimethyldithiocarbomate (Nocceler PZ manufactured by the above company) is 1.79, zinc diethyldithiocarbamate (Nocceler EZ manufactured by the same) is 1.47, and zinc dibutyldithiocarbamate (Nocceler BZ manufactured by the same) is 1.26, and all these materials except wax are larger than 1 in specific gravity. Therefore, by centrifugally separating the latex containing compounding agents, the rubber particles and the compounding agents for vulcanization can be separated. In particular, sulfur and zinc oxide large in specific gravity will settle quickly, and hence removal by separation is extremely easy. Besides, even in the case of vulcanization accelerator of relatively small specific gravity, by properly selecting the centrifugal force, it is possible to separate and remove easily.

In this way, as a result of prior removal of surplus compounding agents not responsible for vulcanization, it is possible to obtain a final rubber product containing only minimum requirements of vulcanization accelerator which may be stimulative to people with a sensitive skin, as well as sulfur and incombustible vulcanization activator (such as zinc oxide).

Instead of centrifugal separation above, moreover, it is possible also to separate and remove free compounding agents from the latex by spontaneous settling caused by difference in specific gravity. It is, however, not a realistic method industrially because it takes about a month for separation. Of the compounding agents, water−soluble compounding agents (such as ammonia casein and potassium hydroxide) cannot be removed by the above centrifugal separation, and hence they are separated by the so−called leaching method in which they are extracted in water after vulcanization and forming.

Examples of latex rubber product of the invention include, among others, gloves, finger−cot, condom, catheter, and overboots, but the rubber products of the invention are not limited to these applications alone.

Thus, in the latex rubber products of the invention, since the excess compounding agents unnecessary for vulcanization are removed by centrifugal separation after prevulcanization, the amount of ash generated by combustion is decreased. Accordingly, an optimum application of the present invention is for radiation contamination preventive gloves which are disposed by incineration after use at nuclear power plants. In addition, the amount of sulfur oxides generated by combustion is also reduced, and it is preferable from the viewpoint of prevention of air pollution, measure against acid rain, and prevention of corrosion of furnace.

Moreover, the latex rubber products of the invention are safe in application as gloves or the like because the compounding agent stimulating the skin are removed by the above mentioned centrifugal separation. The latex rubber products of the invention are also effective in presenting transparent rubber products.

EXAMPLES

The invention is described in further detail below by referring to some of the examples thereof, but the invention is not limited to these illustrated examples alone.

4

Example 1

To natural rubber latex, the compounding agents for vulcanization were added by the following rate, and stirred. After that the mixture was aged for 3 days at 30 °C, and prevulcanized. All these compounding agents were added in the form of dispersant (dispersing medium:water).

```
    (Component)                              (Parts by dry weight)

Natural rubber latex (rubber content 60%) *1        100

Sulfur                                              1.0

Zinc oxide                                          1.0

Mercaptobenzothiazole zinc salt *2                  0.1

Diethyldithiocarbamate zinc salt *2                 0.8

Titanium oxide                                      3.0

2,2'-methylene bis(4-methyl-6-t-butylphenol) *3   1.0

*1: Low ammonia type latex containing tetramethylthiuram

disulfide and zinc oxide by 0.0125% respectively as preserva-


tive,

*2: Vulcanization accelerator,

*3: Antioxidant.
```

The prevulcanized latex (A) was centrifugally separated for 15 minutes at 5000 rpm by a centrifugal separator (type H100B2 manufactued by Kokusan Enshinki K.K.). After separation, only the supernatant portion of latex (B) was taken out with care not to mix with the sediment. The sediment was dispersed again in water and dried to be analyzed.

In latices (A) and (B), the viscosity, pH and solid content were measured. Successively, these latices were poured on a glass plate, heated for 30 minutes at 100 °C to vulcanize, and films of 0.4 to 0.5 mm in thickness were obtained. In respect of each film, Tensile strength at break ($T_B$), elongation at break ($E_B$), 300% modulus, and degree of swelling by toluene were measured. The results are shown in Table 1.

In Table 1, the viscosity was measured by using type BL viscometer manufactured by Tokyo Keiki K.K, at 60 rpm with rotor No. 1. The tensile strength at break ($T_B$), elongation at break ($E_B$), and 300% modulus were measured in accordance with JIS K 6301. The degree of swelling by toluene was determined by measuring the weight change before and after immersion in toluene for 24 hours at 40 °C.

Table 1

| | Latex | |
|---|---|---|
| | (A) | (B) |
| Viscosity (cps) | 74 | 56 |
| pH | 11.1 | 11.1 |
| Solid content (%) | 57.5 | 56.5 |
| 300% modulus | 1.3 | 1.3 |
| Tensile strength at break $T_B$ (MPa) | 37.4 | 37.5 |
| Elongation at break $E_B$(%) | 899 | 992 |
| Degree of swelling (%) | 409 | 478 |

As shown in Table 1, after prevulcanization, the centrifugally separated latex (B) was slightly lower in viscosity as compared with the latex (A) not separated centrifugally, but it can be sufficiently adjusted by using a thickener. Of the properties of obtained films, the centrifugally separated latex (B) was slightly higher in the degree of swelling (which is considered because the crosslinking density is slightly lower), but when centrifugally separated after promoting the degree of prevulcanization, the degree of swelling was equivalent to that of the film using latex (A). On the other hand, concerning the tensile strength at break — ($T_B$) and elongation at break ($E_B$), it is found that the centrifugally separated latex (B) is not inferior to the latex (A) not separated centrifugally.

The films were exposed in the ozone atmosphere of concentration of 50 pphm at 40 ˚C for 100 hours, and the ozone resistance was measured. As a result, there was no difference between the films of latex (A) and latex (B).

On the other hand, zinc diethyldithiocarbamate (ZnEDC) contained in each film was extracted in acetone : chloroform (1 : 1) for 10 hours by using a Soxhlet extractor, and the amount of ZnEDC was determined by high performance liquid chromatography. As a result, ZnEDC was 7321μg/g when com-pounding, 1190μ in the film obtained from latex (A), but was not detected at all in the film obtained from latex (B).

Example 2

To natural latex (high ammonia latex), compounding agents for vulcanization were added by the following rate, stirred, and prevulcanized for 24 hours at 30 ˚C. All compounding agents were added in a form of dispersant (dispersing medium:water).

| (Component) | (Parts by dry weight) |
|---|---|
| Natural rubber latex (rubber content 60%) | 100 |
| Sulfur | 1.0 |
| Zinc oxide | 1.0 |
| Zinc Dibutyldithiocarbamate (vulcanization accelerator) | 0.6 |

The obtained latex (C) was centrifugally separated for 30 minutes at 5000 rpm by using a centrifugal separator (type H100B2 manufactured by Kokusan Enshinki K.K), and the supernatant portion of latex (D) was taken out without mixing |sediment.

The latices (C), (D) were respectively poured on a glass plate, dried at room temperature, and formed into films, which were vulcanized for 30 minutes at 100 ˚C. In each obtained film, the ash content and the amount of sulfur oxide generated in combustion gas were measured. The results are shown in Table 2.

Table 2

| | Latex | |
|---|---|---|
| | C | D |
| Ash content (% by weight) | 1.24 | 0.52 |
| Sulfur oxide (mg/g) *1 | 16.1 | 13.2 |

*1: The amount of gas generated by combustion of rubber per unit weight

It is known from Table 2 that the latex (D) centrifugally separated after prevulcanization is lowered in the ash content and sulfur oxide production as compared with the latex (C).

Example 3

In the same composition as in Example 2, after compounding agents for vulcanization in the natural rubber latex, prevulcanization was effected by aging for 24 hours at 30 °C. The obtained latex was centrifugally separated, with varying the centrifugal force and centrifugal separation time by using a centrifugal separator (type H200 manufactured by Kokusan Enshinki K.K.), and the supernatant portion of latex was taken out, and a film was prepared in the same manner as in Example 2. Shown in Table 3 is the relation between the centrifugal force and ash content when separated centrifugally for 20 minutes with various centrifugal force.

Table 3

| Centrifugal force (G) | Ash content (%) |
|---|---|
| Not separated | 1.20 |
| 450 | 0.90 |
| 1300 | 0.56 |
| 2700 | 0.52 |
| 4700 | 0.53 |

On the other hand, at the fixed centrifugal force of 2700 G, the relation between the centrifugal separation time and ash content by varying the centrifugal separation time is shown in Table 4.

Table 4

| Separation time (min) | Ash content (%) |
|---|---|
| Not separated | 1.20 |
| 10 | 0.61 |
| 20 | 0.50 |
| 40 | 0.51 |
| 60 | 0.50 |

It is known from Table 3 that the ash content is decreased to about 46% of that of the standard latex for comparison (not centrifugally separated after prevulcanization) when separted centrifugally at the centrifugal force of 1300 G for 20 minutes. As known from Table 4, moreover, when centrifugally separated by varying the separation time at the fixed centrifugal force of 2700 G, the ash content is decreased to 50% of the standard latex in about 10 minutes, and to about 40% when centrifugal separation is further continued.

Example 4

To a synthetic isoprene latex, the vulcanization agents were added by the following rate, stirred, and prevulcanized for 24 hours at 30°C. All compounding agents were added in a form of dispersant (dispersing medium:water).

| (Component) | (Parts by dry weight) |
|---|---|
| Synthetic isoprene latex (rubber content 65%) | 100 |
| Sulfur | 1.0 |
| Zinc oxide | 1.0 |
| Dibutyl dicarbamate zinc salt | 0.6 |

The obtained latex (E) was centrifugally separated for 30 minutes at 5000 rpm by using a continuous centrifugal separator (type H−600 manufactured by Kokusan Enshinki K.K). The flow rate of the latex (E) was adjusted so that the retention time be 20 minutes. The latex (F) in the supernatant was automatically taken out.

The latices (E), (F) were separately poured onto a glass plate, dried at room temperature, and formed into films, which were vulcanized for 30 minutes at 100 ˚C. In the obtained films, the ash content and total sulfur content were measured. The results are shown in Table 5.

Table 5

| | Latex | |
|---|---|---|
| | (E) | (F) |
| Ash content (% by weight) | 1.18 | 0.50 |
| Total sulfur content (% by weight) | 1.21 | 0.88 |

It is known from Table 5 that the latex (F) centrifugally separated after prevulcanization is decreased in the ash content and total sulfur content as compared with the latex (E).

**Claims**

1. A latex rubber product reduced in the ash content in combustion and the amount of sulfur oxide generated in combustion gas, comprising a product formed and vulcanized from latex which is prevulcanized in the presence of a compouding agent for vulcanization containing vulcanizing agent of sulfur or sulfur−containing compound, and is deprived of free compounding agents not spent in prevulcanization.

2. A latex rubber product according to claim 1, wherein the latex is a natural rubber latex.

3. A latex rubber product according to claim 1, wherein the compounding agent for vulcanization contains vulcanization accelerator and vulcanization activator in addition to vulcanizing agent.

4. A method for manufacturing latex rubber product reduced in the ash content in combustion and the amount of sulfur oxide in combustion gas, comprising a step of prevulcanizing by adding a compounding agent for vulcanization containing a vulcanizing agent of sulfur or sulfur−containing compound to latex, a step of removing free compounding agents from the prevulcanized latex by centrifugal separation, a step of forming and processing the centrifugally separated latex, and a step of vulcanizing the formed and processed product.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | K.O.CALVERT 'POLYMER LATICES AND THEIR APPLICATIONS' 1982 , APPLIED SCIENCE PUBLISHERS LTD , LONDON,GB * page 19, lines 9-29, especially lines 12-14 and 27-29 * | 1-4 | C08J5/02 C08J3/26 C08L21/02 |
| X | FR-A-791 792 (INTERNATIONAL LATEX PROCESSE LIMITED) * "résumé"; page 2, lines 9-21 * | 1-4 | |
| X | FR-A-1 052 639 (METALLGESELLSCHAFT AG) * "résumé" * | 1-4 | |
| A | GB-A-2 088 389 (LRC PRODUCTS LTD) * page 1; claim 1 * | 1-4 | |

TECHNICAL FIELDS SEARCHED (Int. Cl.5)

C08J

The present search report has been drawn up for all claims

| Place of search | Date of completion of the search | Examiner |
|---|---|---|
| THE HAGUE | 26 JANUARY 1993 | VAN HUMBEECK F. |

EPO FORM 1503 03.82 (P0401)